# EUROPÄISCHE PATENTSCHRIFT

(11) **EP 3 597 520 B1**
(45) Veröffentlichungstag und Bekanntmachung des Hinweises auf die Patenterteilung: **06.04.2022**
(21) Anmeldenummer: 19179339.7
(22) Anmeldetag: 11.06.2019
(51) Int. Cl.: G01C 21/20, B62K 21/12, B62K 21/26, G01C 21/36

(54) **LENKERGRIFF MIT SCHWINGUNGSERZEUGER UND ZWEIRAD MIT DIESEM LENKERGRIFF**
HANDLEBAR GRIP WITH OSCILLATIONS GENERATOR AND BICYCLE COMPRISING SAME
POIGNÉE DE GUIDON AVEC GÉNÉRATEUR DE VIBRATIONS ET BICYCLETTE DOTÉE DE LADITE POIGNÉE

(30) Priorität: 19.07.2018 DE 102018212039
(43) Veröffentlichungstag der Anmeldung: 22.01.2020
(73) Patentinhaber: Robert Bosch GmbH, 70442 Stuttgart (DE)
(72) Erfinder: Dackermann, Tim, 72072 Tuebingen (DE); Vallejo, Adrian, 52074 Aachen (DE); Wienss, Andreas, 72800 Eningen Unter Achalm (DE); Moia, Alessandro, 71088 Holzgerlingen (DE)

(56) Entgegenhaltungen:
- EP-A1- 2 617 637
- WO-A1-2017/198835
- DE-A1-102016 225 634
- DE-U1-202015 102 562
- KR-A- 20180 058 968

## Beschreibung

Die vorliegende Erfindung betrifft einen Lenkergriff für einen Lenker eines Zweirads sowie das Zweirad mit diesem Lenkergriff.

### Stand der Technik

Die Schrift DE 20 2015 102 562 U1 offenbart eine Navigationsvorrichtung mit einer Kommunikationseinrichtung, welche einen Vibrationsmotor umfasst.

Die Schrift DE 10 2016 225634 A1 offenbart einen Lenkergriff nach dem Oberbegriff des Anspruchs 1.

Weitere relevante Schrifte sind die WO 2017/198835 A1, KR 2018 0058968 A und EP 2 617 637 A1.

Ein haptisches Signal, beispielsweise eine mechanische Schwingung an einer Hand, weist gegenüber einer visuellen Anzeige von Hinweisen den Vorteil auf, das beispielsweise Navigationshinweise ohne Neuausrichtung eines Blickfeldes eines Fahrers erfasst werden können. Dadurch sinkt die Unfallgefahr, da der Straßenverkehr unterbrechungsfrei im Blickfeld überwacht werden kann.

Die Aufgabe der vorliegenden Erfindung ist es, einen Lenkergriff mit Schwingungserzeuger für ein Zweirad zur Erzeugung eines haptischen Signals zu verbessern.

### Offenbarung der Erfindung

Die vorstehende Aufgabe wird gemäß dem unabhängigen Anspruch 1 gelöst.

Die vorliegende Erfindung betrifft einen Lenkergriff für ein Zweirad. Der Lenkergriff weist wenigstens einen Schwingungserzeuger auf. Der Schwingungserzeuger ist dazu eingerichtet, eine mechanische Schwingung zu erzeugen, wobei der Lenkergriff dazu eingerichtet ist, teilweise in ein Lenkerrohr eingeschoben zu werden, wobei der Schwingungserzeuger nach dem Einschieben im Lenkerrohr angeordnet ist.

Der Schwingungserzeuger ist beispielsweise ein Elektromotor mit einer Unwuchtmasse und/oder ein Piezoaktor und/oder ein Linearmotor mit einer Masse. Die mechanische Schwingung wird mittels des Schwingungserzeugers insbesondere in Abhängigkeit eines Steuersignals eines Steuergeräts erzeugt. Die mechanische Schwingung beziehungsweise das Steuersignal repräsentieren insbesondere einen Navigationshinweis eines Navigationsverfahrens, eine Warnung vor Kollisionen und/oder Gefahrenstellen und/oder eine Aktivierung einer optischen Richtungsanzeige beziehungsweise eines Blinkers. Der Lenkergriff umfasst ferner ein Dämpfungselement. Das Dämpfungselement ist dazu eingerichtet, nach einer Fixierung des Lenkergriffs an einem Lenkerrohr des Zweirads das Lenkerrohr zu kontaktieren und eine Übertragung einer mechanischen Schwingung des Lenkergriffs zum Lenkerrohr zu dämpfen. Das Dämpfungselement ist vorzugsweise nach der Fixierung zwischen dem Schwingungserzeuger und dem Lenkerrohr angeordnet. Mit anderen Worten ist der Lenkergriff vorteilhafterweise mittels des Dämpfungselements am Lenkerrohr gelagert. Das Dämpfungselement weist vorteilhafterweise einen Polymerschaum, ein Elastomer und/oder besonders bevorzugt ein Gel auf. Das Dämpfungselement ist bevorzugt ein Gel, da diese vorteilhafterweise wenig kompressibel sind und Schwingungen effektiv dämpfen. Des Weiteren weist der Lenkergriff ein Vibrationselement auf. Das Vibrationselement ist mit dem Schwingungserzeuger verbunden. Das Vibrationselement ist dazu eingerichtet, beim Greifen des Lenkergriffs durch eine Hand eines Nutzers eine mittels des Schwingungserzeugers erzeugte mechanische Schwingung an die Hand zu übertragen. Das Vibrationselement ist zumindest teilweise unmittelbar an einer Oberfläche des Lenkergriffs angeordnet. Das Vibrationselement weist insbesondere ein nicht elastisches Polymer und/oder ein Metall auf. Durch den erfindungsgemäßen Lenkergriff entsteht der Vorteil, dass nach einer Fixierung des Lenkergriffs an das Lenkerrohr die erzeugte mechanische Schwingung gedämpft an das Lenkerrohr übertragen wird. Dadurch ist die erzeugte mechanische Schwingung nur an diesem Lenkergriff für einen Nutzer wahrnehmbar. Mit anderen Worten wird nach der Anordnung des Lenkergriffs am Lenkerrohr eine mittels des Schwingungserzeugers des Lenkergriffs beispielsweise an einer rechten Seite des Lenkerrohrs erzeugte mechanische Schwingung nicht auf eine linke Seite des Lenkerrohres übertragen, da das Dämpfungselement die mechanische Schwingung dämpft. Des Weiteren weist der erfindungsgemäße Lenkergriff vorteilhafterweise einen gegenüber dem zitierten Stand der Technik reduzierten Energieverbrauch auf, da eine Masse des Lenkerrohrs wegen des Dämpfungselements nicht zur mechanischen Schwingung mitangeregt wird. Ferner wird durch den Lenkergriff die mittels des Schwingungserzeugers erzeugte mechanische Schwingung sehr effizient an das Vibrationselement beziehungsweise die Oberfläche des Lenkergriffs übertragen, so dass die erzeugte mechanische Schwingung schnell und leicht für einen Nutzer wahrnehmbar ist.

Gemäß der Erfindung ist der Lenkergriff dazu eingerichtet, teilweise in ein Lenkerrohr eingeschoben zu werden, wobei der Schwingungserzeuger nach dem Einschieben insbesondere im Lenkerrohr angeordnet ist. Dadurch entsteht der Vorteil, dass der Lenkergriff nach der Fixierung am Lenkerrohr von außen optisch gegenüber üblichen Lenkergriffen kaum auffällt und der Lenkergriff platzsparend ausgestaltet ist. Außerdem ist der Schwingungserzeuger im Inneren des Lenkerrohrs gut vor Krafteinwirkungen sowie vor Feuchte und/oder niedrigen Temperaturen und/oder hohen Temperaturen geschützt.

In einer Weiterführung ist der Lenkergriff nach dem Einschieben in das Lenkerrohr dazu eingerichtet, zumindest einen Freiraum zwischen dem eingeschobenen Bereich des Lenkergriffs und dem Lenkerrohr zu erzeugen. Dadurch entsteht der Vorteil, dass der Lenkergriff zumindest teilweise gegenüber dem Lenkerrohr frei mechanisch schwingbar im Inneren des Lenkerrohrs angeordnet ist und die mechanische Schwingung des Lenkergriffs kaum an das Lenkerrohr übertragen wird.

In einer bevorzugten Ausgestaltung weist der Lenkergriff eine Funkvorrichtung zur Erzeugung einer Funkverbindung zu einem Steuergerät und/oder Smartphone auf. Durch die Funkverbindung entsteht der Vorteil, dass eine Montage des Lenkergriffs vereinfacht und ein Defekt aufgrund einer gelösten Steckverbindung vermieden wird. Die Funkvorrichtung ist dazu eingerichtet, nach einer Fixierung des Lenkergriffs am Lenkerrohr außerhalb des Lenkerrohrs angeordnet zu sein. Dadurch resultiert der Vorteil, dass die Funkverbindung nicht durch das Lenkerrohr behindert und eine kurze Funkstrecke zum Steuergerät erzeugt wird, welches beispielsweise in einem mittleren Bereich am Lenkerrohr angeordnet ist.

In einer Ausführung ist der Schwingungserzeuger in einem staubdichten und/oder wasserdichten Gehäuse angeordnet. Das Gehäuse weist insbesondere zusätzlich eine Elektronik zur Ansteuerung des Schwingungserzeugers auf. Dadurch ist der Schwingungserzeuger vorteilhafterweise gut vor Staub und/oder Feuchte geschützt und demnach robust beziehungsweise langlebig.

In einer weiteren Ausführung weist das Vibrationselement eine Kammstruktur und/oder eine Resonanzfrequenz in einem Frequenzbereich zwischen 0,1 Hz und 10 kHz auf, insbesondere zwischen 100 und 200 Hz. Dadurch entsteht der Vorteil, dass die erzeugte mechanische Schwingung für einen Menschen sehr gut haptisch wahrnehmbar ist. Die mechanische Schwingung bei einer Anregung des Schwingungserzeugers mit einer Frequenz zwischen 100 und 200 Hz ist beispielsweise gut von anderen mechanischen Anregungen unterscheidbar. Des Weiteren kann eine mechanische Schwingung mit einer Frequenz zwischen 100 und 200 Hz mit niedrigem Leistungsbedarf des Schwingungserzeugers erzeugt werden.

Es kann in einer anderen Ausgestaltung vorgesehen sein, dass das Vibrationselement mindestens eine schwingbar gelagerte Resonanzmasse aufweist. Dadurch entsteht der Vorteil, dass die schwingbar gelagerte Resonanzmasse leicht zu einer stark beziehungsweise deutlich für einen Nutzer wahrnehmbaren Schwingung angeregt werden kann. Vorzugsweise umfasst das Vibrationselement mehrere schwingbar gelagerte Resonanzmassen mit jeweils unterschiedlicher Resonanzfrequenz. Dadurch entsteht der Vorteil, dass mehrere, beispielsweise örtlich voneinander versetzte Resonanzmassen nacheinander oder gleichzeitig zur Schwingung angeregt werden können. Dadurch können komplexe haptische Schwingungssignale mittels des Lenkergriffs erzeugt werden.

Vorzugsweise weist der Lenkergriff ein Stromversorgungselement auf, insbesondere wenigstens eine Batterie, eine Steckbuchse, einen Stecker und/oder eine Induktionsspule. Dadurch wird der Lenkergriff vorteilhafterweise mit elektrischer Energie versorgt.

Es kann optional vorgesehen sein, dass der Lenkergriff eine Befestigungsvorrichtung umfasst, wobei der Lenkergriff mittels der Befestigungsvorrichtung dazu eingerichtet ist, gegenüber dem Lenkerrohr schwingbar fixiert zu sein. Dadurch wird die Montage und die Ausgestaltung des Lenkergriffs erleichtert.

Die Erfindung betrifft auch ein Zweirad mit mindestens einem erfindungsgemäßen Lenkergriff. Im Betrieb des Zweirads können vorteilhafterweise mittels des Lenkergriffs für den Nutzer schnell, leicht und effizient haptische Schwingungssignale erzeugt werden. Diese Schwingungssignale repräsentieren beispielsweise Navigationshinweise und/oder Warnhinweise, wodurch der Fahrkomfort für den Nutzer steigt. Beispielsweise wird im Betrieb des Zweirads für den Nutzer vorteilhafterweise in Abhängigkeit eines ermittelten Navigationshinweises ein haptisches Signal erzeugt. Der Nutzer muss folglich zur Erfassung des Navigationshinweises nicht auf ein Display schauen.

Weitere Vorteile ergeben sich aus der nachfolgenden Beschreibung von Ausführungsbeispielen mit Bezug zu den Figuren.
- Figur 1:: Zweirad mit zwei Lenkergriffen
- Figur 2:: Ansicht eines Lenkergriffs im Querschnitt
- Figur 3:: Lenkergriff mit Vibrationselement
- Figur 4:: Lenkergriff in dreidimensionaler Ansicht
- Figur 5:: alternative Ausführungsform eines Lenkergriffs im Querschnitt
- Figur 6:: Lenkergriff mit Vibrationselement einer alternativen Ausführungsform

### Ausführungsbeispiele

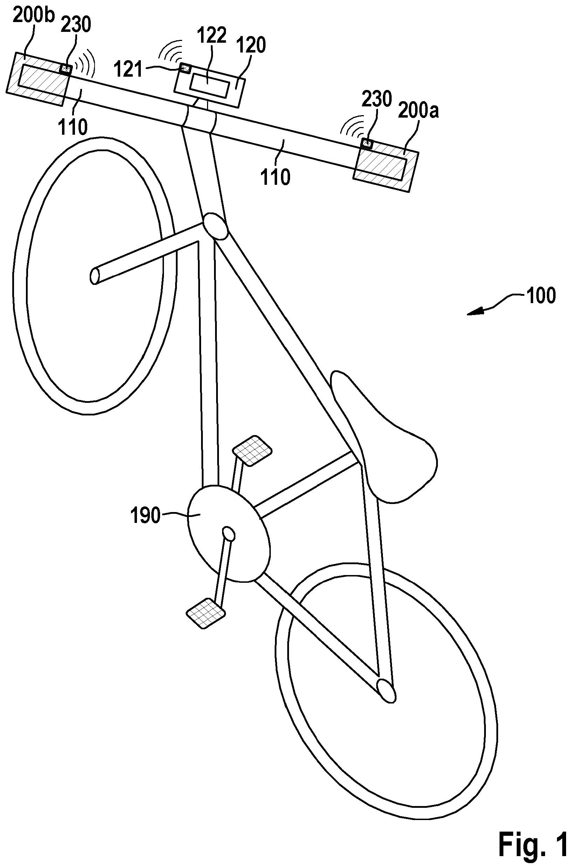

In Figur 1 ist ein Elektrofahrrad als Zweirad 100 mit zwei Lenkergriffen 200a und 200b und einem Steuergerät 120 dargestellt. Die Lenkergriffe 200a und 200b sind am Lenkerrohr 110 des Lenkers des Zweirads 100 angeordnet und fixiert. Mittels des Steuergeräts 120 des Zweirads 100 wird beispielsweise ein Navigationsverfahren durchgeführt. Zusätzlich kann das Steuergerät 120 dazu eingerichtet sein, einen Antriebsmotor 190 des Zweirads 100 anzusteuern, beispielsweise einen Elektromotor eines Elektrofahrrads. Durch das Navigationsverfahren wird vorteilhafterweise mindestens ein Steuersignal erzeugt, welches einen Navigationshinweis zum Abbiegen repräsentiert. Das Steuersignal wird beispielsweise mittels einer Sendevorrichtung 121 des Steuergeräts 120 als Funksignal ausgesendet, insbesondere gemäß einem Bluetooth-Standard. Der Lenkergriff 200a und/oder 200b empfängt das Steuersignal als Funksignal vom Steuergerät 120 mittels einer Funkvorrichtung 230. Alternativ kann das Steuersignal mittels eines Kabels und wenigstens einer Steckverbindung vom Steuergerät 120 zum Lenkergriff 200a und/oder 200b übertragen werden, wodurch insbesondere die Lenkergriffe 200a und/oder 200b zusätzlich mit Energie beziehungsweise Strom versorgt werden können. Die Lenkergriffe 200a und/oder 200b sind dazu eingerichtet, eine mechanische Schwingung in Abhängigkeit des empfangenen Steuersignals mittels jeweils eines Schwingungserzeugers zu erzeugen. Die mechanische Schwingung wird mittels des Schwingungserzeugers bevorzugt mit einer Frequenz zwischen 100 und 200 Hz erzeugt, wodurch die erzeugte mechanische Schwingung für einen Nutzer gut von anderen mechanischen Anregungen unterscheidbar sind. Diese mechanische Schwingung von dem rechten Lenkergriff 200a und/oder dem linken Lenkergriff 200b wird gedämpft an das Lenkerrohr 110 übertragen. Dadurch sind eine mechanische Schwingung des rechten Lenkergriffs 200a am linken Lenkergriff 200b beziehungsweise eine mechanische Schwingung des linken Lenkergriffs 200a am rechten Lenkergriff 200b für den Nutzer nicht wahrnehmbar. Eine erzeugte mechanische Schwingung kann von dem Nutzer des Zweirads haptisch durch eine Hand beim Greifen des Lenkergriffs 200a und/oder 200b wahrgenommen beziehungsweise erfasst werden und repräsentiert insbesondere einen Navigationshinweis, eine Warnung vor Kollisionen oder Gefahrenstellen und/oder einen aktivierten optischen Richtungsanzeiger beziehungsweise Blinker. Beispielsweise wird einem Nutzer des Zweirads 100 durch eine mechanische Schwingung an dem rechten Lenkergriff 200a als Navigationshinweis ein bevorstehendes rechtes Abbiegen haptisch angezeigt, wobei am linken Lenkergriff 200b keine Schwingung wahrnehmbar ist. Der Nutzer kann so während einer haptischen Erfassung des Navigationshinweises folglich sein Blickfeld auf den Straßenverkehr richten beziehungsweise muss sein Blickfeld nicht auf ein Display 122 des Steuergeräts 120 ausrichten, wodurch die Unfallgefahr reduziert ist.

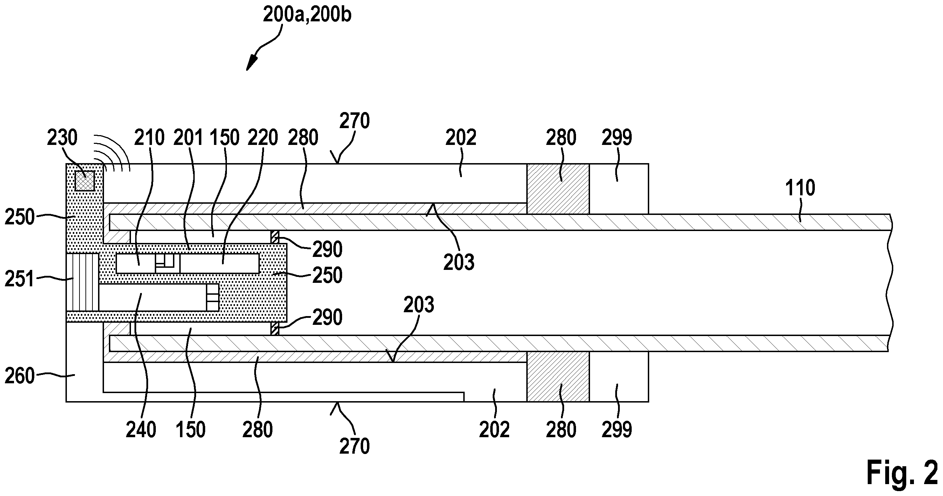

In Figur 2 ist eine Ansicht eines Lenkergriffs 200a oder 200b im Querschnitt dargestellt. Der Lenkergriff 200a, 200b weist einen Schwingungserzeuger 210 und eine Elektronik 220 zur Ansteuerung des Schwingungserzeugers 210 auf. Ferner umfasst der Lenkergriff 200a, 200b eine Funkvorrichtung 230 und eine Batterie als ein Stromversorgungselement 240. In diesem Ausführungsbeispiel sind der Schwingungserzeuger 210, die Elektronik 220, die Funkvorrichtung 230 und das Stromversorgungselement 240 in einem staubdichten und wasserdichten Gehäuse 250 angeordnet, welches beispielsweise einen abnehmbaren Deckel 251 zum Austausch des Stromversorgungselements 240 aufweist. Das Gehäuse 250 ist in diesem Ausführungsbeispiel zum Teil in ein Lenkerrohr 110 eingeschoben. Der Lenkergriff 200a, 200b ist des Weiteren optional dazu eingerichtet, mit einer Befestigungsvorrichtung 299 des Lenkergriffs 200a, 200b am Lenkerrohr 110 fixiert zu sein. Die Befestigungsvorrichtung 299 weist zur Fixierung des Lenkergriffs 200a, 200b am Lenkerrohr 110 beispielsweise eine Schraubverbindung auf. Ein Vibrationselement 260 ist mit dem Schwingungserzeuger 210 fest verbunden, so dass mittels des Schwingungserzeuger 210 eine mechanische Schwingung des Vibrationselements 260 erzeugt werden kann. Das Vibrationselement 260 ist in diesem Beispiel mit dem Gehäuse 250 unmittelbar verbunden. Alternativ ist das Vibrationselement 260 beispielsweise mittels einer Dichtung durch das Gehäuse 250 geführt und kontaktiert unmittelbar den Schwingungserzeuger 210. Das Vibrationselements 260 ist ferner zumindest an einem Teil der Außenoberfläche 270 eines Griffelements 202 des Lenkergriffs 200a, 200b angeordnet. Eine mechanische Schwingung des Vibrationselements 260 wird durch einen Nutzer des Zweirads 100 beim Greifen der Außenoberfläche 270 des Lenkergriffs 200a, 200b haptisch erfasst. Ferner umfasst der Lenkergriff 200a, 200b ein Dämpfungselement 280, welches dazu eingerichtet ist, eine erzeugte mechanische Schwingung des Lenkergriffs 200a, 200b beziehungsweise des Vibrationselements 260 gegenüber dem Lenkerrohr 110 zu dämpfen. Das Dämpfungselement 280 ist in diesem Beispiel an einer Innenfläche 203 des hohlzylindrisch ausgeführten Griffelements 202 angeordnet und weist beispielsweise ein Elastomer auf. Zusätzlich weist der Lenkergriff 200a, 200b optional einen Elastomerring 290 auf, welcher an einem Außenumfang eines Einschubbereiches 201 des Lenkergriffs 200a, 200b angeordnet ist. Der Einschubbereiches 201 ist dazu eingerichtet, nach dem Fixieren des Lenkergriffs 200a, 200b im Lenkerrohr 110 eingeschoben zu sein. Der Elastomerring 290 ist dazu eingerichtet, den Einschubbereich 201 schwingbar im Inneren des Lenkerrohres 110 zu lagern. In diesem Beispiel liegt zwischen dem Einschubbereich 201 des Lenkergriffs 200a, 200b und dem Lenkerrohr 110 ferner ein Freiraum 150 vor.

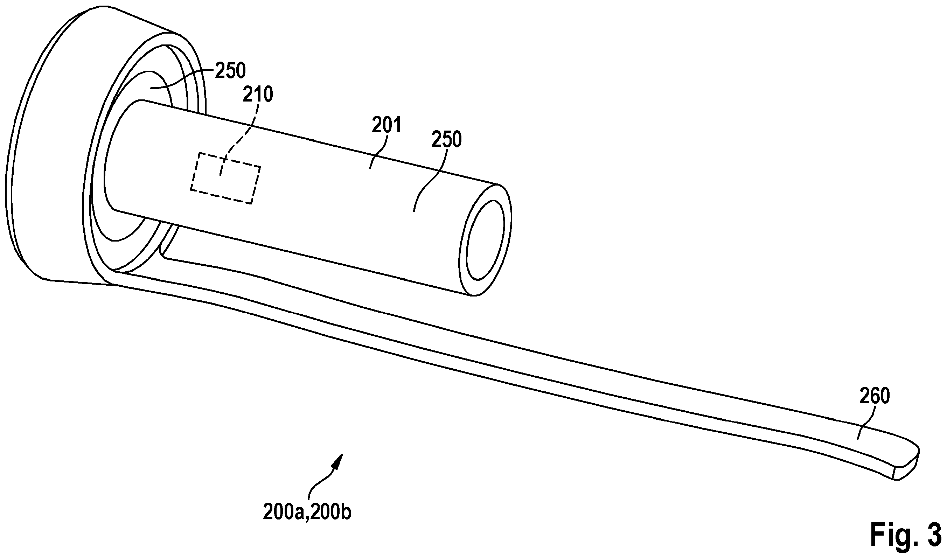

In Figur 3 ist ein Lenkergriff 200a, 200b mit einem Vibrationselement 260 ohne Griffbereich 202 dargestellt. Der Schwingungserzeuger 210 ist dazu eingerichtet, eine mechanische Schwingung des Lenkergriffs 200a, 200b beziehungsweise des Vibrationselements 260 zu erzeugen. Das Vibrationselement 260 ist an eine Außenoberfläche 270 des Lenkergriffs 200a, 200b geführt, wo die erzeugte Schwingung beim Greifen des Lenkergriffs 200a, 200b für einen Nutzer des Lenkergriffs 200a, 200b wahrnehmbar ist. Das Griffelement 202 kann zumindest teilweise elastisch ausgeführt sein, so dass es die mechanischen Schwingungen nur gedämpft überträgt, wobei das Vibrationselements 260 dazu eingerichtet ist, beim Greifen des Lenkergriffs 200a, 200b unmittelbar die Hand des Nutzers zu kontaktieren.

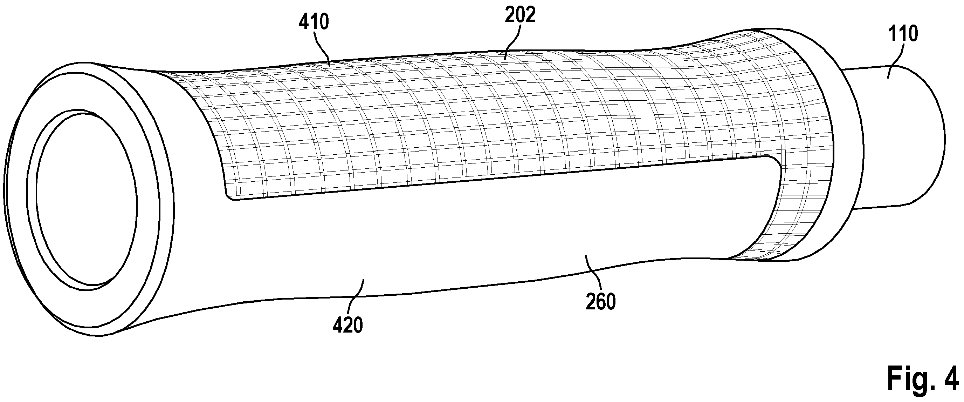

In Figur 4 ist ein Lenkergriff 200a, 200b in dreidimensionaler Ansicht auf einem Lenkerrohr 110 dargestellt. Das Griffelement 202 umfasst einen ersten Teilbereich 410 der Außenoberfläche 270 des Lenkergriffs 200a, 200b. Ein zweiter Teilbereich 420 der Außenoberfläche 270 des Lenkergriffs 200a, 200b weist das Vibrationselements 260 auf. Beim Greifen des Lenkergriffs 200a, 200b kontaktiert der Nutzer somit unmittelbar mit der Hand das Vibrationselements 260. Eine mechanische Schwingung kann folglich für den Nutzer unmittelbar am Vibrationselement 260 wahrgenommen werden. Das Griffelement 202 kann in diesem Beispiel ein Elastomer umfassen, so dass die Hand des Nutzers komfortabel am Griffelement 202 abgestützt wird. Alternativ ist das Vibrationselement 260 zumindest teilweise unter dem Griffelement 202 an der Außenoberfläche 270 des Lenkergriffs 200a, 200b angeordnet, wobei das Griffelement 202 dazu eingerichtet ist, die erzeugte mechanische Vibration des Vibrationselements 260 an die Außenoberfläche 270 des Lenkergriffs 200a, 200b zu übertragen.

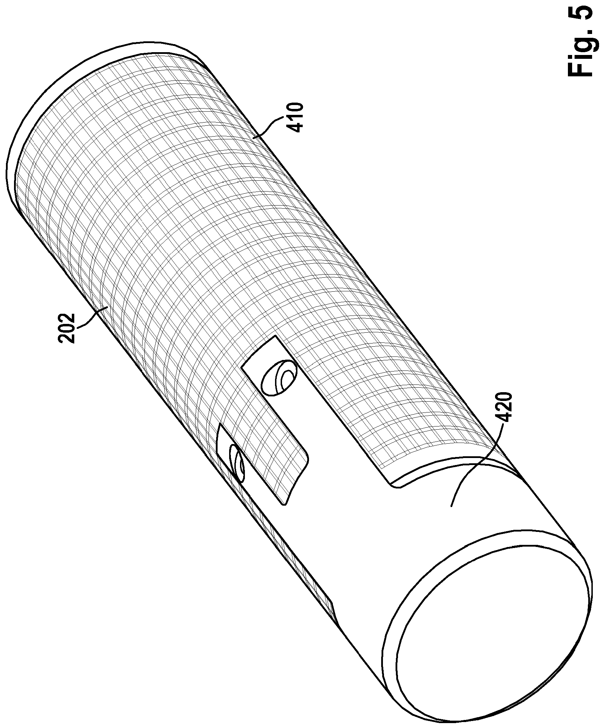

In Figur 5 ist ein Lenkergriff 200a, 200b mit einem Griffelement 202 an der Außenoberfläche 270 des Lenkergriffs 200a, 200b dargestellt, wobei das nicht dargestellte Vibrationselement 260 eine Kammstruktur aufweist und in den Aussparungen des Griffelement 202 angeordnet wird. In einer alternativen Ausgestaltung kann das Griffelement 202 das Vibrationselement 260 überdecken, wobei das Griffelement 202 in dieser alternativen Ausgestaltung dazu eingerichtet ist, mechanische Vibrationen zu übertragen.

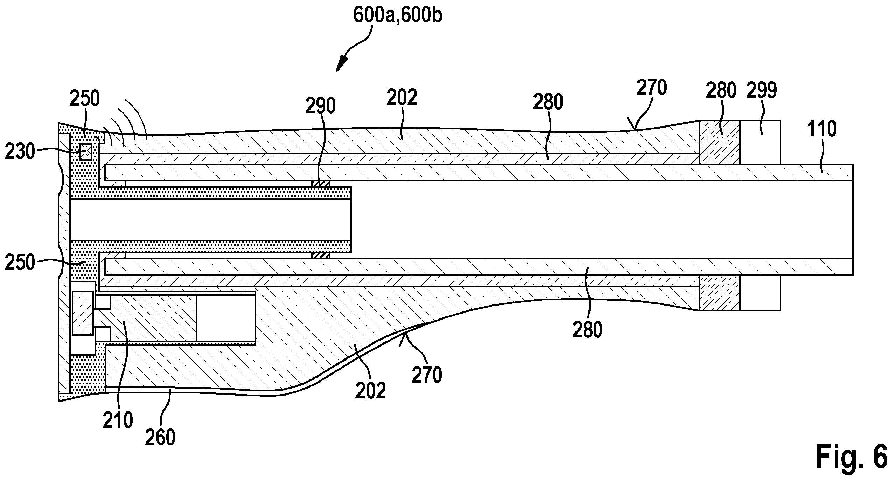

In Figur 6 ist ein ergonomisch geformter Lenkergriff 200a, 200b mit einem Vibrationselement 260 dargestellt. In dieser Ausführungsform sind der Schwingungserzeuger 210 und die Funkvorrichtung 230 des ergonomisch geformten Lenkergriffs 200a, 200b dazu eingerichtet, außerhalb des Lenkerrohrs 110 angeordnet zu sein. Die Funkvorrichtung 230 ist durch eine Anordnung außerhalb des Lenkerrohrs 110 dazu eingerichtet, eine barrierefreie Funkverbindung zu einem Steuergerät 120 eines Zweirads 100 herzustellen. Der ergonomisch geformter Lenkergriff 200a, 200b weist darüber hinaus das Dämpfungselement 280, das Griffelement 202 und eine Befestigungsvorrichtung 299 auf.

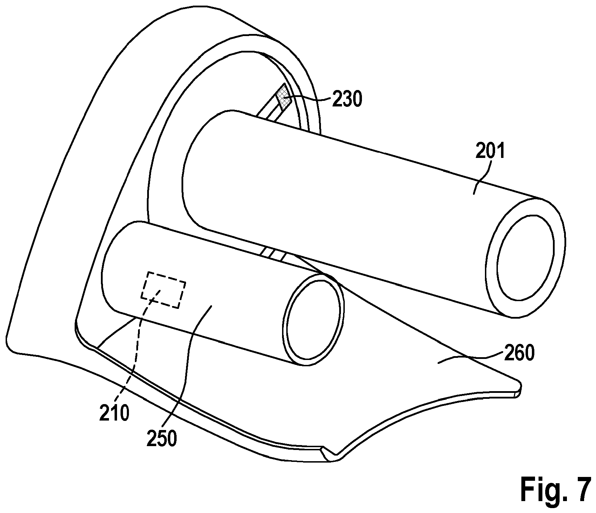

In Figur 7 sind das Vibrationselement 260 und das Gehäuse 250 sowie der Einschubbereich 201 des ergonomisch geformter Lenkergriff 200a, 200b aus Figur 6 in einer dreidimensionalen Ansicht dargestellt.

## Patentansprüche

1. Lenkergriff (200a, 200b) für ein Zweirad (100), aufweisend die folgende Komponenten
• wenigstens einen Schwingungserzeuger (210), welcher dazu eingerichtet ist, eine mechanische Schwingung zu erzeugen, wobei der Lenkergriff (200a, 200b) dazu eingerichtet ist, teilweise in ein Lenkerrohr (110) eingeschoben zu werden, wobei der Schwingungserzeuger (210) nach dem Einschieben im Lenkerrohr (110) angeordnet ist,
• ein Dämpfungselement (280), wobei das Dämpfungselement (280) dazu eingerichtet ist, nach einer Fixierung des Lenkergriffs (200a, 200b) an dem Lenkerrohr (110) des Zweirads (100) das Lenkerrohr (110) zu kontaktieren und eine Übertragung der mechanischen Schwingung des Lenkergriffs (200a, 200b) zum Lenkerrohr (110) zu dämpfen, und
• ein Vibrationselement (260), welches mit dem Schwingungserzeuger (210) verbunden ist, wobei das Vibrationselement (260) dazu eingerichtet ist, beim Greifen des Lenkergriffs (200a, 200b) durch eine Hand eines Nutzers die mittels des Schwingungserzeugers (210) erzeugte mechanische Schwingung an die Hand zu übertragen, **dadurch gekennzeichnet dass** das Vibrationselement zumindest teilweise unmittelbar an einer Oberfläche des Lenkergriffs angeordnet ist.

2. Lenkergriff (200a, 200b) nach Anspruch 1, **dadurch gekennzeichnet, dass** der Lenkergriff (200a, 200b) dazu eingerichtet ist, zumindest einen Freiraum (150) zwischen einem Einschubbereich (201) des Lenkergriffs (200a, 200b) und dem Lenkerrohr (110) zu erzeugen.

3. Lenkergriff (200a, 200b) nach einem der vorhergehenden Ansprüche, **dadurch gekennzeichnet, dass** der Lenkergriff (200a, 200b) folgende Komponente aufweist
• eine Funkvorrichtung (230), wobei die Funkvorrichtung (230) dazu eingerichtet ist, nach einer Fixierung des Lenkergriffs (200a, 200b) außerhalb des Lenkerrohrs (110) angeordnet zu sein.

4. Lenkergriff (200a, 200b) nach einem der vorhergehenden Ansprüche, **dadurch gekennzeichnet, dass** der Schwingungserzeuger (210) in einem Gehäuse (250) angeordnet ist, wobei das Gehäuse (250) staubdicht und/oder wasserdicht ist.

5. Lenkergriff (200a, 200b) nach einem der vorhergehenden Ansprüche, **dadurch gekennzeichnet, dass** das Vibrationselement (260) eine Kammstruktur und/oder eine Resonanzfrequenz in einem Frequenzbereich zwischen 100 und 200 Hz aufweist.

6. Lenkergriff (200a, 200b) nach einem der vorhergehenden Ansprüche, **dadurch gekennzeichnet, dass** das Vibrationselement (260) mindestens eine schwingbar gelagerte Resonanzmasse aufweist.

7. Lenkergriff (200a, 200b) nach einem der vorhergehenden Ansprüche, **dadurch gekennzeichnet, dass** der Lenkergriff (200a, 200b) folgende Komponente aufweist
• ein Stromversorgungselement (240), insbesondere wenigstens eine Batterie, eine Steckbuchse, einen Stecker und/oder eine Induktionsspule.

8. Lenkergriff (200a, 200b) nach einem der vorhergehenden Ansprüche, **dadurch gekennzeichnet, dass** der Lenkergriff (200a, 200b) folgende Komponente aufweist
• Eine Befestigungsvorrichtung (299), wobei der Lenkergriff (200a, 200b) mittels der Befestigungsvorrichtung (299) dazu eingerichtet ist, gegenüber dem Lenkerrohr (110) schwingbar fixiert zu sein.

9. Zweirad (100) mit mindestens einem Lenkergriff (200a, 200b) nach einem der Ansprüche 1 bis 8.

## Claims

1. Handlebar grip (200a, 200b) for a two-wheeled vehicle (100), having the following components
• at least one oscillation generator (210), which is designed to generate a mechanical oscillation, wherein the handlebar grip (200a, 200b) is designed to be partially pushed into a handlebar tube (110), wherein, after pushing in, the oscillation generator (210) is arranged in the handlebar tube (110),
• a damping element (280), wherein the damping element (280) is designed to contact the handlebar tube (110) after fixing of the handlebar grip (200a, 200b) on the handlebar tube (110) of the two-wheeled vehicle (100) and to damp transmission of the mechanical oscillation of the handlebar grip (200a, 200b) to the handlebar tube (110), and
• a vibration element (260), which is connected to the oscillation generator (210), wherein the vibration element (260) is designed so as, when the handlebar grip (200a, 200b) is gripped by a hand of a user, to transmit the mechanical oscillation generated by means of the oscillation generator (210) to the hand, **characterized in that** the vibration element is at least partially arranged directly on a surface of the handlebar grip.

2. Handlebar grip (200a, 200b) according to Claim 1, **characterized in that** the handlebar grip (200a, 200b) is designed to create at least one clearance (150) between a pushing-in region (201) of the handlebar grip (200a, 200b) and the handlebar tube (110).

3. Handlebar grip (200a, 200b) according to one of the preceding claims, **characterized in that** the handlebar grip (200a, 200b) has the following component
• a radio device (230), wherein the radio device (230) is designed to be arranged outside the handlebar tube (110) after fixing of the handlebar grip (200a, 200b).

4. Handlebar grip (200a, 200b) according to one of the preceding claims, **characterized in that** the oscillation generator (210) is arranged in a housing (250), wherein the housing (250) is dust-tight and/or water-tight.

5. Handlebar grip (200a, 200b) according to one of the preceding claims, **characterized in that** the vibration element (260) has a comb structure and/or a resonant frequency in a frequency range between 100 and 200 Hz.

6. Handlebar grip (200a, 200b) according to one of the preceding claims, **characterized in that** the vibration element (260) has at least one oscillatably mounted resonant mass.

7. Handlebar grip (200a, 200b) according to one of the preceding claims, **characterized in that** the handlebar grip (200a, 200b) has the following component
• a power supply element (240), in particular at least one battery, a socket, a plug and/or an induction coil.

8. Handlebar grip (200a, 200b) according to one of the preceding claims, **characterized in that** the handlebar grip (200a, 200b) has the following component
• a fastening device (299), wherein the handlebar grip (200a, 200b) is designed by means of the fastening device (299) to be oscillatably fixed with respect to the handlebar tube (110).

9. Two-wheeled vehicle (100) with at least one handlebar grip (200a, 200b) according to one of Claims 1 to 8.

## Revendications

1. Poignée de guidon (200a, 200b) pour un deux-roues (100), comprenant les composants suivants :
- au moins un générateur de vibration (210), qui est adapté pour générer une vibration mécanique, la poignée de guidon (200a, 200b) étant adaptée pour être partiellement insérée dans un tube de guidon (110), le générateur de vibration (210) étant agencé dans le tube de guidon (110) après l'insertion,
- un élément d'amortissement (280), l'élément d'amortissement (280) étant adapté pour, après une fixation de la poignée de guidon (200a, 200b) sur le tube de guidon (110) du deux-roues (100), venir en contact avec le tube de guidon (110) et amortir une transmission de la vibration mécanique de la poignée de guidon (200a, 200b) au tube de guidon (110), et
- un élément vibrant (260), qui est relié au générateur de vibration (210), l'élément vibrant (260) étant conçu pour, lorsqu'une main d'un utilisateur saisit la poignée de guidon (200a, 200b), transmettre la vibration mécanique générée au moyen du générateur de vibration (210) à la main, **caractérisé en ce que** l'élément vibrant est agencé au moins partiellement directement sur une surface de la poignée de guidon.

2. Poignée de guidon (200a, 200b) selon la revendication 1, **caractérisée en ce que** la poignée de guidon (200a, 200b) est adaptée pour générer au moins un espace libre (150) entre une zone d'insertion (201) de la poignée de guidon (200a, 200b) et le tube de guidon (110).

3. Poignée de guidon (200a, 200b) selon l'une quelconque des revendications précédentes, **caractérisée en ce que** la poignée de guidon (200a, 200b) présente le composant suivant :
- un dispositif radio (230), le dispositif radio (230) étant adapté pour être agencé à l'extérieur du tube de guidon (110) après une fixation de la poignée de guidon (200a, 200b).

4. Poignée de guidon (200a, 200b) selon l'une quelconque des revendications précédentes, **caractérisée en ce que** le générateur de vibration (210) est agencé dans un boîtier (250), le boîtier (250) étant étanche à la poussière et/ou étanche à l'eau.

5. Poignée de guidon (200a, 200b) selon l'une quelconque des revendications précédentes, **caractérisée en ce que** l'élément vibrant (260) présente une structure en peigne et/ou une fréquence de résonance dans une plage de fréquences comprise entre 100 et 200 Hz.

6. Poignée de guidon (200a, 200b) selon l'une quelconque des revendications précédentes, **caractérisée en ce que** l'élément vibrant (260) présente au moins une masse de résonance montée de manière à pouvoir vibrer.

7. Poignée de guidon (200a, 200b) selon l'une quelconque des revendications précédentes, **caractérisée en ce que** la poignée de guidon (200a, 200b) présente le composant suivant :
- un élément d'alimentation électrique (240), en particulier au moins une batterie, une fiche femelle, une fiche mâle et/ou une bobine d'induction.

8. Poignée de guidon (200a, 200b) selon l'une quelconque des revendications précédentes, **caractérisée en ce que** la poignée de guidon (200a, 200b) présente le composant suivant :
- un dispositif de fixation (299), la poignée de guidon (200a, 200b) étant adaptée pour, au moyen du dispositif de fixation (299), être fixée de manière à pouvoir vibrer par rapport au tube de guidon (110).

9. Deux-roues (100) comprenant au moins une poignée de guidon (200a, 200b) selon l'une quelconque des revendications 1 à 8.
